# EUROPÄISCHE PATENTSCHRIFT

(11) **EP 3 620 284 B1**
(45) Veröffentlichungstag und Bekanntmachung des Hinweises auf die Patenterteilung: **27.07.2022**
(21) Anmeldenummer: 19194409.9
(22) Anmeldetag: 29.08.2019
(51) Int. Cl.: B29C 45/36, B29C 45/16

(54) **VERFAHREN UND VORRICHTUNG ZUR HERSTELLUNG EINES HOHLFÖRMIGEN SPRITZGUSSTEILS**
METHOD AND DEVICE FOR PRODUCING A HOLLOW INJECTION MOULDED COMPONENT
PROCÉDÉ ET DISPOSITIF DE FABRICATION D'UNE PIÈCE CREUSE DE MOULAGE PAR INJECTION

(30) Priorität: 07.09.2018 DE 102018121835
(43) Veröffentlichungstag der Anmeldung: 11.03.2020
(73) Patentinhaber: Gerresheimer Regensburg GmbH, 93047 Regensburg (DE)
(72) Erfinder: Kämereit, Markus, 48301 Nottuln (DE)
(74) Vertreter: Hannke, Christian

(56) Entgegenhaltungen:
- EP-A1- 3 127 677
- WO-A1-2014/105661
- DE-A1-102016 118 768
- DE-U1-202014 104 871
- US-A1- 2008 102 235
- US-A1- 2011 254 202
- US-A1- 2013 200 549

## Beschreibung

Die Erfindung betrifft ein Verfahren und eine Vorrichtung zur Herstellung eines hohlförmigen Spritzgussteils durch ein Spritzgussverfahren.

Derartige hohlförmige Spritzgussteile sollen insbesondere Primärpackmittel für medizinische Anwendungen darstellen. Dies sind im Besonderen Spritzenköper. Solche Primärpackmittel können jedoch auch Vials, Ampullen oder medizinische Container darstellen. Solche Primärpackmittel sind in der Regel als längliche Hohlzylinder ausgestaltet und aus einem thermoplastischen Kunststoff gefertigt. Üblicherweise werden solche Primärpackmittel durch ein Spritzgussverfahren hergestellt. Dabei wird ein Formkern in einen Formhohlraum eingebracht, wodurch eine Kavität definiert wird. Das Spritzgussteil, beziehungsweise das Primärpackmittel wird dann durch Einspritzen eines Kunststoffmaterials ausgeformt. Es wird in diesem Zusammenhang auch von einer Herstellung mittels eines einzigen Schusses gesprochen.

Allerdings ergibt sich bei besonders dünnen und/oder langen Primärpackmitteln, beispielsweise bei Feindosierungsspritzen mit einem Aufnahmevolumen von 0,01 ml das Problem, dass der Formkern bruchgefährdet ist und darüber hinaus schlecht kühlbar ist. Ein solcher Formkern muss entsprechend lang und dünn ausgestaltet sein. Es wirken jedoch mechanische als auch thermisch Kräfte auf den Formkern, so dass dieser einer erhöhten Bruchgefahr ausgesetzt ist. Darüber hinaus ist es möglich, dass das in den Formhohlraum hineinragende Ende des Formkerns nicht mehr zentrisch in dem Formhohlraum angeordnet ist, aufgrund von bestimmten Materialtoleranzen oder aufgrund bestimmter wirkender Kräfte beispielsweise Gravitationskräfte. Daraus würde eine Änderung der Wandstärke des Primärpackmittels folgen. Ein solches Primarpackmittel müsste dann entsprechend aussortiert werden.

Ferner ist die Ausgestaltung des distalen Endes des Packmittels in vielerweise dadurch eingeschränkt, da das Spritzgusswerkzeug, oder Formwerkzeug nur beschränkt ausgestaltet werden kann.

Die Druckschrift DE 10 2016 118 768 A1 offenbart ein Spritzgussverfahren zur Herstellung einer Spritze mit einem integrierten Verschlusselement. Dabei wird zunächst der Spritzenkörper in einer ersten Kavität gebildet. Der Spritzenkörper wird dann in eine zweite Kavität eingebracht, in welcher ein zweites Kunststoffmaterial eingespritzt wird, welches dann das Verschlusselement bildet. Das zweite Kunststoffmaterial geht dabei keine stoffschlüssige Verbindung mit dem Spritzenkörper ein.

Die Druckschrift DE 20 2014 104 871 U1 zeigt einen Formkern zum Herstellen von Formteilen. Der Formkern besteht aus wenigstens zwei Trägermaterialien, welche eine Stabilisierung und einen optimierten Wärmetransport gewährleisten. Ferner wird ein Formkern gezeigt, welcher mit einem Kühlmittelkanal ausgestattet ist.

Die Druckschrift US 2013 / 200549 A1 beinhaltet eine Spritze beziehungsweise ein Spritzgussverfahren zur Herstellung einer Spritze, wobei die Spritze mit einem Stechmittel ausgestattet ist. In dem Herstellungsverfahren wird das Stechmittel zunächst in die Kavität eingelegt. Das proximale Ende des Stechmittels wird dabei von einer Aufnahme in dem Spritzgusskern aufgenommen. Nach dem Ausformen des Spritzenkörpers kann dieser mit einer weiteren inneren Wandung versehen werden. Dazu wird der erste Spritzgusskern entfernt und ein zweiter Spritzgusskern mit einem kleineren Durchmesser in den Spritzenkörper eingeführt. Im Anschluss kann ein zweiter Kunststoff eingespritzt werden.

Die Druckschrift US 2011 / 254202 A1 lehrt ein Spritzgussverfahren zur Herstellung einer Kanüle aus einem Polymer.

Die Druckschrift US 2008 / 102235 A1 offenbart eine Karpule beziehungsweise ein Herstellungsverfahren für eine Karpule. Die Karpule umfasst dabei ein Siegelelement, welches die Karpule dichtend abschließt. Bei dem Herstellungsverfahren wird zunächst der Karpulenkörper durch Einspritzen eines ersten Kunststoffs in eine Spritzgussform hergestellt. Nach einer teilweisen Aushärtung des ersten Kunststoffs wird ein erstes vorderes Element der Spritzgussform durch ein zweites vorderes Element ersetzt. Die Spritzgussform ist dadurch derart ausgestaltet, dass ein zweiter Kunststoff auf den Karpulenkörper aufgespritzt werden kann.

Die Druckschrift WO 2014 / 105661 A1 beschreibt ein Herstellungsverfahren für einen optischen Obturator. Der Obtruator umfasst einen Tubus, in dessen Lumen ein Endo-skop anordenbar ist. Am distalen Ende des Tubus ist eine Spitze vorgesehen, welche aus einem transparenten Kunststoff besteht. In dem Verfahren wird zunächst durch eine erste Einspritzdüse 506 ein erster Kunststoff in eine Kavität, welche durch einen Spritzgusskern und einem Hohlraum gebildet wird, gespritzt. In einem zweiten Schritt wird der Spritzgusskern in proximaler Richtung etwas zurückverlagert und anschließend ein zweiter Kunststoff auf den Tubus aufgespritzt. Der zweite Kunststoff bildet dann die Spitze aus.

Die Druckschrift EP 3 127 677 A1 stellt ein Verfahren zur Herstellung einer Spritze mit einer Nadel in einem Spritzgussverfahren bereit. Die Nadel wird einerseits in einem vorderen Abschnitt des Spritzgusswerkzeugs und anderseits durch einen axial innerhalb eines Spritzgusskerns verlagerbaren Stift gehalten. Nach dem Einspritzen des Kunststoffs bildet sich der distale Abschnitt des Spritzenkörpers um einen proximalen Abschnitt der Nadel. Ein Einkleben der Nadel ist somit nicht mehr notwendig.

Soll schließlich ein Spritzenkörper mit einem integrierten Stechmittel, wie beispielsweise einer Kanüle einer Nadel, oder Ähnlichem hergestellt werden, ergibt sich bei den erwähnten länglichen und/oder dünnen Spritzenkörpern die Schwierigkeit dieses Stechmittel entsprechend präzise in dem Werkzeug zu platzieren.

Die der Erfindung zugrundeliegende Aufgabe ist demnach ein Verfahren beziehungsweise eine Vorrichtung zur Herstellung eines hohlförmigen Spritzgussteils insbesondere eines Primärpackmittels für medizinische Anwendungen durch ein Spritzgussverfahren bereitzustellen, welches die eingangs genannten Probleme löst.

Die Aufgabe wird gelöst von einem Verfahren zur Herstellung eines hohlförmigen Spritzgussteils insbesondere eines Primärpackmittels für medizinische Anwendungen durch ein Spritzgussverfahren umfassend folgende Verfahrensschritte:
a) Bereitstellen einer ersten Werkzeugmatrize mit einem ersten Formhohlraum und einem als Werkzeugpatrize ausgebildeten Formkern;
b) Einbringen eines Formkerns in den ersten Formhohlraum, so dass eine erste Kavität gebildet wird und der Formkern in axialer Richtung (X) über den Formhohlraum hinausragt, wodurch der Formkern in Wirkkontakt mit der ersten Werkzeugmatrize und/oder mit einem Aufnahmeelement gebracht wird;
c) Einspritzen eines ersten Kunststoffmaterials in die erste Kavität, so dass ein erster Abschnitt des Spritzgussteils gebildet wird;
d) Transferieren des ersten Abschnitts des Spritzgussteils zu einer zweiten Kavität;
e) Einspritzen eines zweiten Kunststoffmaterials in die zweite Kavität, so dass ein zweiter Abschnitt direkt an dem ersten Abschnitt des Spritzgussteils angeformt wird.

Durch die Anwendung eines solchen Mehrkomponenten-Spritzgussverfahrens, ergibt sich eine Vielzahl von Möglichkeiten zur Ausgestaltung des zweiten Abschnitts des Spritzgussteils, welcher erfindungsgemäß einem Anschlusselement bzw. einem Anschlusselement und einem Abschnitt eines Behälters eines Spritzenkörpers darstellt. Eine solche Vielzahl wird durch das erneute Einspritzen eines zweiten Kunststoffmaterials erreicht. Anforderungen, welche speziell den ersten Abschnitt des Spritzgussteils, der erfindungsgemäß zumindest abschnittsweise dem Behälter des Spritzenkörpers entspricht, in welchem das Medium aufzubewahren ist und den proximalen Abschnitt des Spritzenkörpers, welcher beispielsweise einen Fingerflansch umfassen kann, betreffen, müssen somit für das Ausformen des zweiten Abschnitts nicht mehr berücksichtigt werden, da dieser schon hergestellt ist.

Ferner kann durch das Hinausragen beziehungsweise den Wirkkontakt des Formkerns mit der ersten Werkzeugmatrize und/oder dem Aufnahmeelement die Anordnung des Formkerns stabilisiert werden. Dies ist insbesondere bei besonders langen und/oder dünnen Primarpackmitteln vorteilhaft, da der Formkern entsprechend lang und/oder dünn ausgestaltet sein muss und somit nicht eine ausreichende mechanische Stabilität aufweist.

Nach einer besonders bevorzugten Ausführungsform ist der Formkern zylinderförmig ausgebildet. Vorteilhafterweise wird der Formkern zentrisch in den ersten Formhohlraum eingebracht, so dass ein Abstand zwischen einer Mantelfläche des Formkerns und einer Innenwandfläche des ersten Formhohlraums eine Wandstärke des Spritzgussteils definieren. Die erste Kavität ist demnach der Raum des ersten Formhohlraums, welcher nicht durch den Formkern ausgefüllt wird.

Vorteilhafterweise ist der erste Formhohlraum zylinderförmig ausgebildet. Der erste Formhohlraum weist dabei vorteilhafterweise eine erste axiale Öffnung und eine zweite axiale Öffnung auf, wobei in Schritt b) der Formkern durch die erste axiale Öffnung in den Formhohlraum eingebracht wird. Der Formkern tritt dann durch die zweite Öffnung hindurch und ragt somit in seiner Endposition in axialer Richtung über den Formhohlraum hinaus.

Vorzugsweise weist die erste Werkzeugmatrize an der zweiten axialen Öffnung des ersten Formhohlraums eine Stirnwandung auf, welche sich in radialer Richtung nach innen erstreckt. Bevorzugt liegt nach dem Einbringen des Formkerns diese Stirnwandung an dem Formkern an, so dass die erste Kavität in axialer Richtung (X) durch diese Stirnwandung begrenzt wird.

Nach einer weiteren bevorzugten Ausführungsform weist die erste Werkzeugmatrize an der ersten axialen Öffnung des ersten Formhohlraums eine Stirnwandung auf, welche sich in radialer Richtung nach innen erstreckt. Alternativ ist es auch möglich, dass der Formkern entsprechend ausgestaltet ist, um die erste Kavität entsprechend abzuschließen.

Nach einem weiteren Gedanken der Erfindung wird ein axialer Abschnitt der ersten Kavität durch den Abstand zwischen einer Mantelfläche des Formkerns und einer Innenwandfläche des ersten Formhohlraums gebildet. Darüber hinaus kann ein radialer Abschnitt der ersten Kavität durch den Abstand zwischen einer Mantelfläche des Formkerns und der ersten Werkzeugmatrize gebildet werden. Durch einen solchen radialen Abschnitt kann beispielsweise ein Fingerflansch eines Spritzenkörpers durch das Einspritzen des ersten Kunststoffs gebildet werden.

Erfindungsgemäß weist der Formkern einen ersten Endabschnitt und einen zweiten Endabschnitt auf. Vorzugsweise sind die Endabschnitte in axialer Richtung (X) gegenüberliegend. Der zweite Endabschnitt wird in Schritt b) in den ersten Formhohlraum eingebracht. In der Endposition des Formkerns ragt dieser zweite Endabschnitt in axialer Richtung (X) über den Formhohlraum hinaus, wobei die Endposition diejenige Position ist, in der der Formkern sich beim Einspritzen des ersten Kunststoffs befindet. Vorzugsweise wird der Formkern nur so weit in den ersten Formhohlraum eingebracht, dass der erste Endabschnitt ebenso über den Formhohlraum hinausragt. Demnach ragen vorteilhafterweise sowohl der erste als auch der zweite Endabschnitt in axialer Richtung (X) über den ersten Formhohlraum hinaus. Erfindungsgemäß ist der zweite Endabschnitt in Wirkkontakt mit der ersten Werkzeugmatrize und/oder mit dem Aufnahmeelement als auch mit der zweiten Kavität. Dies erfolgt sobald der Formkern sich in seiner Endposition befindet. Unter der Endposition ist die Position zu verstehen, welche der Formkern beim Einspritzen des ersten Kunststoffs einnimmt.

Nach einem nicht beanspruchten Gedanken ist der Wirkkontakt ein Formschluss. Vorzugsweise erfolgt der Formschluss durch eine Aufnahme des Formkerns in einer Aufnahmeausnehmung. Die Aufnahmeausnehmung ist weiter bevorzugt zentrisch zu dem ersten Formhohlraum angeordnet. Die Aufnahmeausnehmung kann vorzugsweise in der ersten Werkzeugmatrize und/oder in dem Aufnahmeelement angeordnet sein. Vorteilhafterweise ist der erste Endabschnitt des Formkerns an einer Haltevorrichtung angeordnet, welche mit der Aufnahmeausnehmung fluchtet. Es ist somit eine optimale Zentrierung des Formkerns in dem ersten Formhohlraum ermöglicht, wodurch eine gleichmäßige Wandstärke des Spritzgussteils gewährleistet wird.

Vorzugsweise wird das erste Kunststoffmaterial durch eine erste Einspritzdüse in den ersten Formhohlraum eingespritzt. In der Regel ist die Einspritzdüse an einem Ende der Kavität, also in etwa bei der ersten oder zweiten axialen Öffnung des Formhohlraums. Die Einspritzung erfolgt demnach vorteilhafterweise in axialer Richtung (X). Dies soll einen Formkernversatz verhindern, welcher durch den Einspritzdruck verursacht wird. Durch die vorteilhafte beiderseitige Lagerung des Formkerns in der Aufnahmeausnehmung und in der Haltevorrichtung kann die Einspritzdüse beliebig platziert werden, also beispielsweise auch an einer Seitenwand des ersten Formhohlraums. Ein Formkernversatz durch den Einspritzdruck wird durch die beiderseitige Lagerung effektiv verhindert.

Nach dem Einspritzen des ersten Kunststoffs in die erste Kavität, ist der erste Abschnitt des Spritzgussteils auf dem Formkern angeordnet. Da ein vorbestimmter Überstandsbereich des zweiten Endabschnitts des Formkerns über den ersten Formhohlraum hinausragte, ist dieser nicht mit dem ersten Kunststoffmaterial bedeckt.

Erfindungsgemäß ist der Wirkkontakt ein thermischer Kontakt, wobei eine Temperierung des Formkerns sowohl über dessen ersten Endabschnitt als auch dessen zweiten Endabschnitt erfolgt. Bevorzugt nach dem Einspritzen des ersten oder zweiten Kunststoffs in die jeweilige Kavität erstarrt das Spritzgussteil durch eine Abkühlung der umgebenden Werkzeugteile, wie beispielsweise dem Formkern. Da bei besonders langen und/oder dünnen Spritzgussteilen der Formkern ebenso bemessen sein muss, ist eine Kühlung, welche lediglich von einer Seite auf den Formkern wirkt nicht ausreichend. Durch den Wirkkontakt des zweiten Endabschnitts kann eine Temperierung oder Kühlung sowohl von dem ersten Endabschnitt als auch von dem zweiten Endabschnitt des Formkerns ausgehen. Eine entsprechende Temperiereinrichtung kann demnach bevorzugt in der ersten Werkzeugmatrize und/oder mit dem Aufnahmeelement vorgesehen sein.

Das Spritzgussteil erfährt durch die Abkühlung einen entsprechenden Schwund, wodurch sich dieses aus dem Formhohlraum entformt. Um zu vermeiden, dass das Spritzgussteil auf dem Formkern aufschrumpft, kann vorzugsweise der Formkern entsprechend temperiert werden, nachdem das Spritzgussteil erstarrt ist. Die Temperatur des Formkerns kann erhöht oder gesenkt werden. Da das Spritzgussteil und der Formkern unterschiedliche Ausdehnungskoeffizienten besitzen, entsteht vorteilhafterweise durch die Temperierung ein entsprechender Entformungsspalt zwischen dem Formkern und dem Spritzgussteil.

Vorzugsweise kann die Temperierung des Formkerns induktiv, elektrisch oder mittels eines Temperierfluids erfolgen. Ein Temperierfluid kann ein Gas, beispielsweise CO₂ oder eine Flüssigkeit, wie beispielsweise Wasser oder ein Öl sein.

Erfindungsgemäß wird die zweite Kavität durch Einbringen zumindest eines Abschnitts des Formkerns in eine zweite Werkzeugmatrize mit einem zweiten Formhohlraum gebildet. Demnach wäre auch ein Bereitstellen einer zweiten Werkzeugmatrize mit einem zweiten Formhohlraum als Verfahrensschritt vorteilhaft. Vorzugsweise wird die zweite Kavität durch den Überstandsbereich des Formkerns und den zweiten Formhohlraum gebildet.

Vorzugsweise wird der Formkern derart in den zweiten Formhohlraum eingebracht, dass zumindest der Überstandsbereich des Formkerns und der vorbestimmte Bereich des ersten Abschnitts sich im zweiten Formhohlraum befinden. Vorzugsweise liegt ein vorbestimmter Bereich des ersten Abschnitts des Spritzgussteils an einer Innenfläche des zweiten Formhohlraums an. Demnach würde das zweite Kunststoffmaterial in axialer Richtung (X) im Anschluss an den ersten Abschnitt des Spritzgussteils direkt angeformt.

Alternativ wäre möglich, das ein vorbestimmter Bereich des ersten Abschnitts des Spritzgussteils sich derart in der Kavität befindet, dass das zweite Kunststoffmaterial sowohl in radialer Richtung (R) als auch in axialer Richtung (X) an dem vorbestimmten Bereich beziehungsweise dem ersten Abschnitt des Spritzgussteils direkt angeformt wird.

Der vorbestimmte Bereich des ersten Abschnitts des Spritzgussteils ist dabei vorteilhafterweise derart gewählt, dass eine entsprechende Anformung des zweiten Abschnitts des Spritzgussteils in der zweiten Kavität gewährleistet ist.

Es wäre jedoch auch denkbar, dass der Formkern entsprechend der Länge des ersten Abschnitts in den zweiten Formhohlraum eingebracht wird, so dass der komplette erste Abschnitt des Spritzgussteils sich in dem zweiten Formhohlraum befindet. In diesem Fall würde vorteilhafterweise der erste Abschnitt des Spritzgussteils an einer Innenfläche des zweiten Formhohlraums anliegen. Der zweite Abschnitt wird dann in axialer Richtung (X) an den ersten Abschnitt direkt angeformt.

Vorteilhafterweise wird der Formkern zentrisch in den zweiten Formhohlraum eingebracht, so dass ein Abstand zwischen einer Mantelfläche des Überstandsbereichs des Formkerns und einer Innenwandfläche des zweiten Formhohlraums eine zweite Kavität beziehungsweise die Wandstärke des zweiten Abschnitts des Spritzgussteils definieren. Das Temperierfluid kann beispielsweise durch entsprechende Kanäle durch den Formkern geleitet werden.

Weiter bevorzugt ist der zweite Formhohlraum als ein Hohlzylinder ausgebildet, welcher mit einer Stirnwandung abgeschlossen ist. Vorteilhafterweise ist die zweite Einspritzdüse z in dieser Stirnwandung angeordnet. Die Erfindung ist jedoch nicht auf eine solche Ausführung beschränkt. Die zweite Einspritzdüse kann beliebig platziert werden, beispielsweise auch an einer Seitenwand des zweiten Formhohlraums angeordnet sein.

Vorzugsweise sind der erste Formhohlraum und der zweite Formhohlraum Teil des gleichen Formwerkzeugs. Denkbar wäre aber auch, dass die beiden Formhohlräume jeweils Teil eines separaten Formwerkzeuges sind. Das Transferieren des Spritzgussteils würde somit auch einen Transfer in ein weiteres Formwerkzeug umfassen.

Nach einer weiteren vorteilhaften Ausführungsform weist die zweite Kavität ein weiteres Spritzgusswerkzeug auf. Vorzugsweise umfasst das weitere Spritzgusswerkzeug zwei relativ zueinander verlagerbare Werkzeughälften, welche eine Ausnehmung aufweisen. Bevorzugt bilden im geschlossenen Zustand des weiteren Spritzgusswerkzeugs, also wenn die Werkzeughälften aneinander liegen, diese Ausnehmungen die zweite Kavität. Vorteilhafterweise ist weiterhin eine Öffnung vorgesehen, durch welche ein Abschnitt des Formkerns und/oder ein vorgegebener Bereich des ersten Abschnitts des Spritzgussteils in die zweite Kavität eingebracht werden können. Durch eine derartige Ausgestaltung kann der zweite Abschnitt des Spritzgussteils beliebig ausgestaltet werden.

Demnach kann das zweite Kunststoffmaterial lediglich in axialer Richtung (X) an dem ersten Abschnitt des Spritzgussteils direkt angeformt werden. Es ist auch denkbar, dass das zweite Kunststoffmaterial sowohl in radialer Richtung (R) als auch in axialer Richtung (X) an dem vorbestimmten Bereich beziehungsweise dem ersten Abschnitt des Spritzgussteils direkt angeformt wird.

Nach einer weiteren bevorzugten Ausführungsform wird in Schritt d) der erste Abschnitt des Spritzgussteils mittels des Formkerns zu der zweiten Kavität transferiert. Vorzugsweise wird hierbei der Überstandsbereich des zweiten Endabschnitts des Formkerns und/oder ein vorbestimmter Bereich des ersten Abschnitts des Spritzgussteils in die zweite Kavität eingeführt.

Vorzugsweise ist der erste Formhohlraum, der zweite Formhohlraum beziehungsweise das weitere Spritzgusswerkzeug, in einem stationären Element des Formwerkzeuges angeordnet, d. h. diese Elemente sind unbeweglich ausgebildet.

Vorzugsweise ist der Formkern mittels der Haltevorrichtung auf einem beweglichen Element angeordnet, welches relativ zu dem stationären Element derart verlagerbar ist, dass der Formkern senkrecht zur Öffnungsebene des ersten bzw. zweiten Formhohlraums beziehungsweise der Öffnung in dem weiteren Spritzgusswerkzeug bewegt werden kann. Das bewegliche Element wird vorzugsweise hydraulisch oder elektromechanisch angetrieben.

Es wäre dabei auch denkbar, mehrere erste beziehungsweise zweite Formhohlräume beziehungsweise weitere Spritzgusswerkzeuge in dem stationären Element anzuordnen. Entsprechend wären dann auch mehrere Formkerne an dem beweglichen vorgesehen. So können in einem Arbeitszyklus mehrere Spritzgussteile hergestellt werden.

Nach einem weiteren vorteilhaften Gedanken der Erfindung wird vor Schritt d) der Formkern zumindest abschnittsweise aus dem ersten Abschnitt des Spritzgussteils entfernt.

Der Formkern kann demnach komplett aus dem Spritzgussteils entfernt werden. Das Spritzgussteil würde somit mittels einer weiteren Transfereinrichtung zu der zweiten Kavität transferiert.

Es ist jedoch auch denkbar, dass der Formkern nur abschnittsweise aus dem Spritzgussteil entfernt wird. Vorteilhafterweise wird der Formkern soweit in das Spritzgussteil verlagert, bis der Übergangsbereich vollständig in dem Spritzgussteil sich befindet oder dessen zweites Ende mit dem entsprechenden Ende des ersten Abschnitts des Spritzgussteils bündig abschließt. Der erste Abschnitt des Spritzgussteils kann demnach mittels des Formkerns in den zweiten Formhohlraum eingebracht werden. Der Formkern ragt hierbei jedoch nicht in den zweiten Formhohlraum, so dass auf diesen kein zweites Kunststoffmaterial aufgespritzt werden kann.

Nach einem weiteren vorteilhaften Gedanken der Erfindung ist in der zweiten Kavität ein Einlegeteil angeordnet, welches mit dem zweiten Kunststoff umspritzt wird. Vorzugsweise ist das Einlegeteil ein metallisches Einlegeteil in Form eines Stechmittels. Ein Stechmittel kann eine Nadel eine Kanüle oder Ähnliches sein. Somit können insbesondere Spritzenkörper hergestellt werden, welche eine sogenannte "staked in"- Nadel aufweisen.

Vorzugsweise weist die zweite Kavität eine Haltevorrichtung für das Einlegeteil auf. Eine solche Haltevorrichtung kann eine Klemmvorrichtung eine magnetische Haltevorrichtung oder ähnliches sein.

Vorzugsweise wird das zweite Kunststoffmaterial durch eine zweite Einspritzdüse in die zweite Kavität eingespritzt. Die zweite Einspritzdüse kann sowohl an einer radialen als auch an einer axialen Seitenwand des zweiten Formhohlraums angeordnet sein.

Nach einer weiteren bevorzugten Ausführungsform ist in der zweiten Kavität ein Einlegeteil angeordnet, welches mit einem Adapterelement versehen ist. Vorzugsweise wird das Adapterelement mit dem zweiten Kunststoff umspritzt. Die Verwendung von derartigen Adapterelementen oder auch Hubs genannt, ist vorteilhaft, wenn Nadeln mit einer sehr geringen Austrittsweite, beispielsweise ophthalmische Nadeln verwendet werden sollen. Durch die geringen Abmessungen der Nadel ist eine Halterung dieser in der zweiten Kavität schwierig. Dies kann beispielsweise zu einer Beschädigung des Nadelschliffs führen. Durch das Vorsehen eines Adapterelements an der Nadel kann eine Halterung über das Adapterelement erfolgen.

Das einzuspritzende Kunststoffmaterial wird bevorzugt in einer Plastifiziereinheit plastifiziert. Eine solche Plastifiziereinheit umfasst unter anderem einen Plastifizierzylinder mit einer Schnecke und Heizelemente. Das plastifizierte Kunststoffmaterial wird dann vorzugsweise über einen Angusskanal der entsprechenden Kavität zugeführt.

Nach einem weiteren vorteilhaften Gedanken der Erfindung wird das erste Kunststoffmaterial in die erste Kavität und/oder das zweite Kunststoffmaterial in die zweite Kavität über jeweils einen Heißkanal eingespritzt. Das von der Plastifiziereinheit zu der jeweiligen Einspritzdüse führende Angusssystem ist hierdurch vorteilhaft von dem Formwerkzeug thermisch isoliert. Bei anderweitigen Angusssystemen erstarrt das Kunststoffmaterial in dem Angusssystem. Der sogenannte Anguss muss dann von dem Formteil abgetrennt werden. Dies erfordert zusätzliche Werkzeuge. Ferner muss das zusätzliche Kunststoffmaterial entsorgt werden. Bei der Verwendung eines Heißkanals wird das Angusssystem auf einer entsprechend hohen Temperatur gehalten, so dass der Anguss nicht erstarrt.

In der Einspritzphase wird dabei das plastifizierte Kunststoffmaterial über die erste Einspritzdüse in die jeweilige Kavität unter einem hohen Druck in die Kavität eingespritzt. Der Druck liegt dabei bevorzugt zwischen einem Wert von ca. 1 MPa und ca. 200 MPa. Das plastifizierte Kunststoffmaterial hat bei dem Einspritzen vorzugsweise eine Temperatur zwischen 100°C und 400°C. Die die Kavität bildenden Elemente haben jedoch eine geringere Temperatur von vorzugsweise zwischen 80°C und 120°C. Bei Kontakt mit den vergleichsweise kalten Wandbereichen der Kavitäten erstarrt der Kunststoff, bei Erreichen des Erstarrungspunkts des jeweiligen Materials. Um eine möglichst homogene Verteilung des Kunststoffmaterials in der Kavität zu gewährleisten, muss das Kunststoffmaterial entsprechend schnell in die Kavität eingebracht werden. Die Einspritzgeschwindigkeit liegt vorzugsweise zwischen 5 ccm/s und 40 ccm/s.

Nach dem Einspritzen wird bevorzugt ein Nachdruck in einem Bereich zwischen 10 MPa und 50 MPa, weiter bevorzugt in einem Bereich zwischen 20 MPa und 40 MPa, besonders bevorzugt bei ca. 30 MPa aufrechterhalten. Der Nachdruck dient zum Ausgleich einer zu übermäßigen Schwindung, d. h. der thermisch bedingten Volumenreduktion des eingespritzten Formteils.

Nach einem weiteren Gedanken der Erfindung sind das erste und das zweite Kunststoffmaterial die gleichen Kunststoffmaterialien. Alternativ sind das erste und das zweite Kunststoffmaterial unterschiedliche Materialen, welche jedoch eine stoffschlüssige Verbindung eingehen.

Vorzugsweise sind das erste und/oder das zweite Kunststoffmaterial ein Polymer-Kunststoff, bevorzugt aus einem Polyolefin, beispielsweise Polypropylen oder Polyethylen, besonders bevorzugt aus einem Cyclo-Olefinen Polymer (COP) beziehungsweise aus einem Cyclo-Olefinen Co-Polymer (COC). COC ist im Gegensatz zu den teilkristallinen Polyolefinen, wie Polyethylen und Polypropylen, amorph und damit transparent. Derartige Kunststoffe zeichnen sich dadurch aus, dass sie eine hervorragende Biokompatibilität, insbesondere Blutverträglichkeit sowie eine äußerst geringe Wasseraufnahme/ Wasserdampfdurchlässigkeit aufweisen. Weiterhin zeigen diese Kunststoffe keine Reaktion mit den üblichen zur Anwendung kommenden Medikamenten.

Die der Erfindung zugrundeliegende Aufgabe wird weiterhin durch eine Vorrichtung zur Herstellung eines länglichen hohlförmigen Spritzgussteils insbesondere Primärpackmittels für medizinische Anwendungen gelöst. Die erfindungsgemäße Vorrichtung umfasst eine erste Werkzeugmatrize mit einem ersten Formhohlraum und einem als Werkzeugpatrize ausgebildeten Formkern, welcher einen ersten Endabschnitt und einen zweiten Endabschnitt aufweist, wobei der Formkern in dem ersten Formhohlraum anordenbar ist, so dass sowohl der erste als auch der zweite Endabschnitt in axialer Richtung (X) über den ersten Formhohlraum hinausragen, wodurch der zweite Endabschnitt in Wirkkontakt mit der ersten Werkzeugmatrize und/oder mit einem Aufnahmeelement steht.

Vorteilhafte weitere Ausführungsformen der Vorrichtung zur Herstellung eines hohlförmigen Spritzgussteils entsprechen den vorteilhaften Ausführungsformen des Verfahrens zur Herstellung eines hohlförmigen Spritzgussteils.

Die der Erfindung zugrundeliegende Aufgabe wird weiterhin gelöst durch ein hohlförmiges Spritzgussteil, insbesondere ein Primärpackmittel für medizinische Anwendungen, hergestellt nach einem Verfahren zur Herstellung eines hohlförmigen Spritzgussteils gemäß den genannten vorteilhaften Ausführungsformen, vorzugsweise hergestellt in einer Vorrichtung zur Herstellung eines hohlförmigen Spritzgussteils gemäß den genannten Ausführungsformen.

Erfindungsgemäß ist das hohlförmige Spritzgussteil ein Spritzenkörper, wobei der erste Abschnitt des Spritzgussteils im Wesentlichen dem Behälter für das Medium entspricht, welches in der Spritze aufzubewahren ist. Vorteilhafterweise ist an dem Behälter ein Fingerflansch vorgesehen.

Erfindungsgemäß ist der zweite Abschnitt des Spritzgussteils ein Anschlusselement bzw. ein Anschlusselement und ein Abschnitt des Behälters. Bevorzugt ist das Anschlusselement konusförmig, beispielsweise ein Luer-Konus.

Nach einer weiteren bevorzugten Ausführungsform ist der zweite Abschnitt ein Stechmittel, beispielsweise eine Nadel oder eine Kanüle angeordnet, welches von dem zweiten Kunststoff umspritzt ist.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine Schnittdarstellung einer Vorrichtung zur Herstellung eines hohlförmigen Spritzgussteils;
- Fig. 2: eine Schnittdarstellung einer Vorrichtung zur Herstellung eines hohlförmigen Spritzgussteils nach einer weiteren Ausführungsform;
- Fig. 3: eine Schnittdarstellung einer Vorrichtung zur Herstellung eines hohlförmigen Spritzgussteils nach einer weiteren Ausführungsform;
- Fig. 4: eine Schnittdarstellung einer Vorrichtung zur Herstellung eines hohlförmigen Spritzgussteils nach einer weiteren Ausführungsform;
- Fig. 5: eine Schnittdarstellung einer Vorrichtung zur Herstellung eines hohlförmigen Spritzgussteils nach einer weiteren Ausführungsform;
- Fig. 6: eine Schnittdarstellung einer Vorrichtung zur Herstellung eines hohlförmigen Spritzgussteils nach einer weiteren Ausführungsform;
- Fig. 7: eine Schnittdarstellung eines hohlförmigen Spritzgussteils;
- Fig. 8: eine Schnittdarstellung eines hohlförmigen Spritzgussteils nach einer weiteren Ausführungsform.

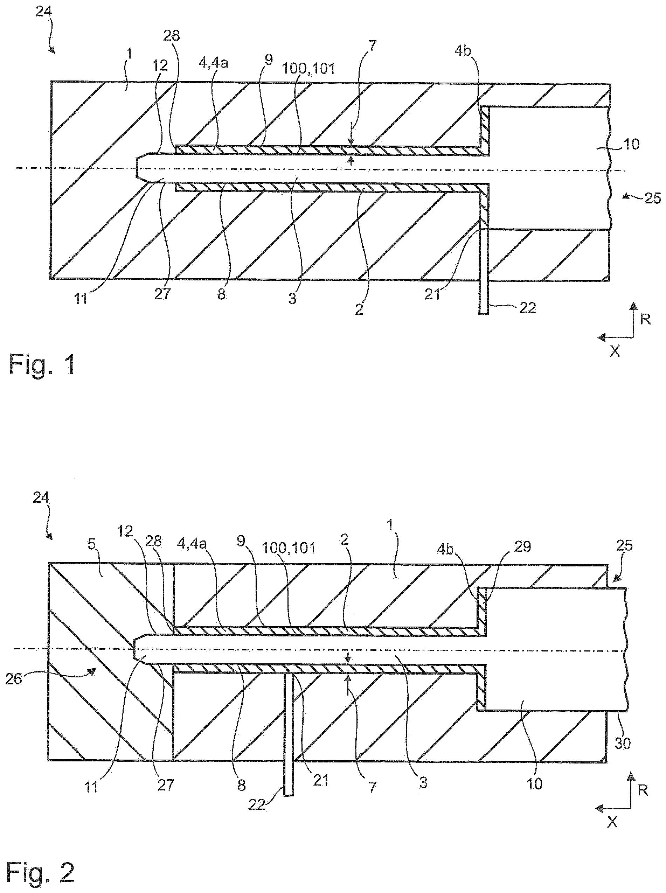

In den Figuren 1 bis 6 ist ein Verfahren zur Herstellung eines hohlförmigen Spritzgussteils (100, 100a) insbesondere eines Primärpackmittels für medizinische Anwendungen, sowie eine entsprechende Vorrichtung (24) zur Herstellung eines hohlförmigen Spritzgussteils (100, 100a) dargestellt. Das Verfahren umfasst umfassend folgende Verfahrensschritte:
a) Bereitstellen einer ersten Werkzeugmatrize (1) mit einem ersten Formhohlraum (2) und einem als Werkzeugpatrize ausgebildeten Formkern (3);
b) Einbringen eines Formkerns (3) in den ersten Formhohlraum (2), so dass eine erste Kavität (4) gebildet wird und der Formkern (3) in axialer Richtung (X) über den Formhohlraum (2) hinausragt, wodurch der Formkern (3) in Wirkkontakt mit der ersten Werkzeugmatrize (1) und/oder mit einem Aufnahmeelement (5) gebracht wird;
c) Einspritzen eines ersten Kunststoffmaterials in die erste Kavität (4), so dass ein erster Abschnitt (101) des Spritzgussteils (100, 100a) gebildet wird;
d) Transferieren des ersten Abschnitts (101) des Spritzgussteils (100, 100a) zu einer zweiten Kavität (6);
e) Einspritzen eines zweiten Kunststoffmaterials in die zweite Kavität (6), so dass ein zweiter Abschnitt (102) direkt an dem ersten Abschnitt (101) des Spritzgussteils (100, 100a) angeformt wird.

Die Vorrichtung (24) zur Herstellung eines hohlförmigen Spritzgussteils (100, 100a), insbesondere zur Herstellung mit einem Verfahren nach einem der Ansprüche 1 bis 12 umfasst eine erste Werkzeugmatrize (1) mit einem ersten Formhohlraum (2) und einem als Werkzeugpatrize ausgebildeten Formkern (3), welcher einen ersten Endabschnitt (10) und einen zweiten Endabschnitt (11) aufweist, wobei der Formkern (3) in dem ersten Formhohlraum (2) anordenbar ist, so dass sowohl der erste (10) als auch der zweite Endabschnitt (11) in axialer Richtung (X) über den ersten Formhohlraum (2) hinausragen, wodurch der zweite Endabschnitt (11) in Wirkkontakt mit der ersten Werkzeugmatrize (1) und/oder mit einem Aufnahmeelement (5) steht.

Der Formkern (3) ist zylinderförmig insbesondere kreisyzlinderförmig ausgebildet. Wie aus den Figuren 1 bis 3 ersichtlich wird der Formkern (3) zentrisch ersten Formhohlraum (2) der ersten Werkzeugmatrize (1) eingebracht.

Ein Abstand (7) zwischen einer Mantelfläche (8) des Formkerns (3) und einer Innenwandfläche (9) des ersten Formhohlraums (2) definieren dabei eine Wandstärke (103) des Spritzgussteils (101) nach dem Einspritzen des ersten Kunststoffmaterials. Dabei wird ein axialer Abschnitt (4a) der ersten Kavität (4) den Abstand (7) zwischen einer Mantelfläche (8) des Formkerns (3) und einer Innenwandfläche (9) des ersten Formhohlraums (3) gebildet.

Der erste Formhohlraum (2) weist eine erste axiale Öffnung (25) und eine zweite axiale Öffnung (26) auf. In Schritt b) wird der Formkern (3) durch die erste axiale Öffnung (25) in den Formhohlraum (2) eingebracht. In seiner Endposition, d. h. in der Position, in der das Einspritzen des ersten Kunststoffmaterials erfolgt, ragt der zweite Endabschnitt (11) des Formkerns (3) durch die zweite axiale Öffnung (26) hindurch. Dieser aus dem Formhohlraum (2) hinausragende vorbestimmte Überstandsbereich (27) des zweiten Endabschnitts (11) des Formkerns (3) wird somit beim Einspritzen des ersten Kunststoffmaterials nicht durch diesen bedeckt.

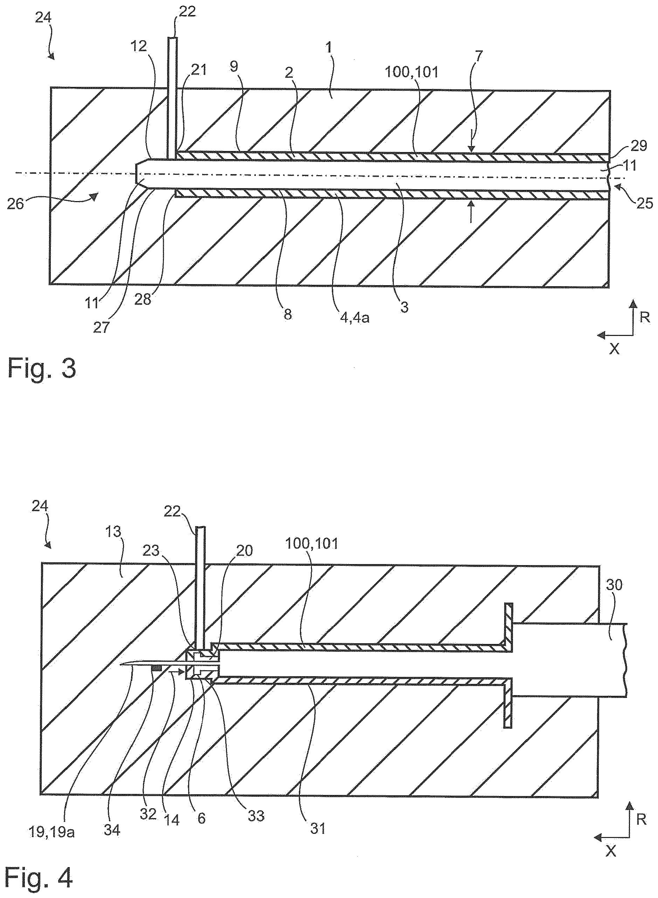

Die erste Werkzeugmatrize (1) weist dazu an der zweiten axialen Öffnung (26) des ersten Formhohlraums (2) eine Stirnwandung (28) auf, welche sich in radialer Richtung (R) nach Innen erstreckt. Diese Stirnwandung (28) liegt nach dem Einbringen des Formkerns (3) an diesem an, so dass der Formhohlraum (2) in axialer Richtung (X) abgeschlossen ist. In der Ausführungsform nach Figur 3 weist die erste Werkzeugmatrize (1) sowohl an der zweiten axialen Öffnung (26) des ersten Formhohlraums (2) eine Stirnwandung (28) als auch an der ersten Öffnung (25) des ersten Formhohlraums (2) eine Stirnwandung (29) auf, welche sich in radialer Richtung (R) nach Innen erstrecken. Diese Stirnwandungen (28, 29) liegen nach dem Einbringen des Formkerns (3) an diesem an, so dass der Formhohlraum (2) abgeschlossen ist.

Darüber hinaus kann ein radialer Abschnitt (4b) der ersten Kavität (4) durch den Abstand (7) zwischen einer Mantelfläche (8) des Formkerns (3) und der ersten Werkzeugmatrize (1) gebildet werden. Der radiale Abschnitt (4b) der ersten Kavität (4) kann jedoch auch gänzlich oder teilweise durch eine Stirnwandung (29) abgeschlossen werden, wie beispielsweise in Figur 2 gezeigt. Durch einen solchen radialen Abschnitt (4b) kann ein Fingerflansch (109) eines Spritzenkörpers (100a) gebildet werden.

Der Wirkkontakt des Formkerns (3) mit der ersten Werkzeugmatrize (1) und/oder mit dem Aufnahmeelement (5) ist ein Formschluss. Dieser Formschluss erfolgt durch eine Aufnahme des Formkerns (3) in einer Aufnahmeausnehmung (12). Diese Aufnahmeausnehmung (12) ist zentrisch zu dem ersten Formhohlraum (2) angeordnet. Nach der Ausführungsform gemäß den Figuren 1 und 3 kann diese Aufnahmeausnehmung (12) in der ersten Werkzeugmatrize (1) angeordnet sein. Figur 2 zeigt eine Ausführungsform, in welcher die Aufnahmeausnehmung (12) in dem Aufnahmeelement (5) angeordnet ist.

Der erste Endabschnitt (10) des Formkerns (3) ist an einer Haltevorrichtung (30) angeordnet, welche mit der Aufnahmeausnehmung der ersten Werkzeugmatrize (1) und/oder mit dem Aufnahmeelement (5) fluchtet. Es ist somit eine optimale Zentrierung des Formkerns (3) in dem ersten Formhohlraum (2) ermöglicht, wodurch eine gleichmäßige Wandstärke (103) des Spritzgussteils (100, 100a) gewährleistet ist.

Ferner ist der Wirkkontakt ein thermischer Kontakt. Die Temperierung des Formkerns (3) kann somit sowohl über dessen ersten Endabschnitt (10) als auch dessen zweiten Endabschnitt (11) erfolgen, wobei die Temperierung des Formkerns (3) induktiv, elektrisch oder mittels eines Temperierfluids erfolgen kann.

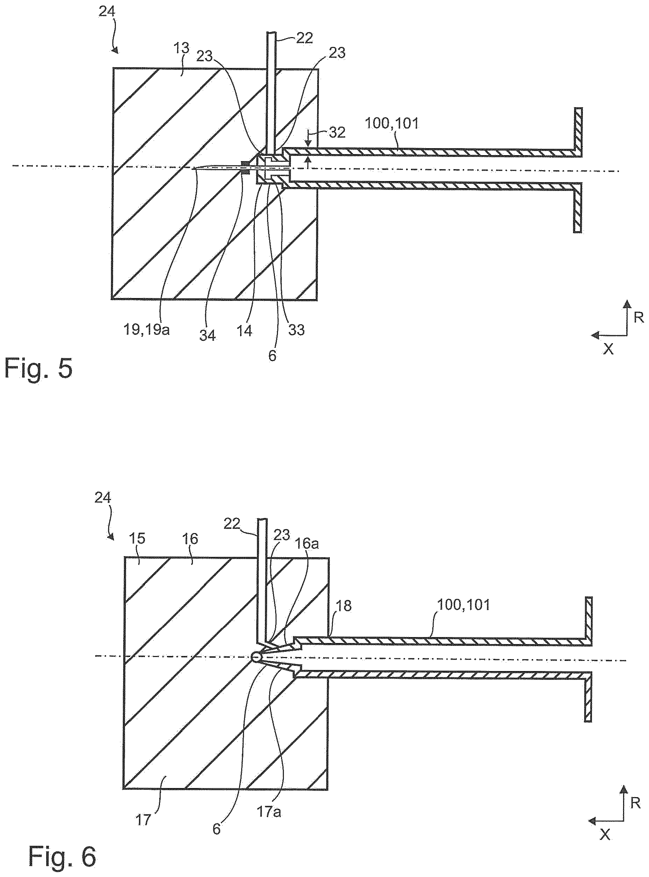

Die zweite Kavität (6) wird erfindungsgemäß durch Einbringen zumindest eines Abschnitts des Formkerns (3) in eine zweite Werkzeugmatrize (13) mit einem zweiten Formhohlraum (14) gebildet werden. Dies ist beispielsweise in den Figuren 4 und 5 gezeigt. Hier wird der Überstandsbereich (27) des Formkerns (3) und in den zweiten Formhohlraum eingebracht, wodurch die zweite Kavität (6) gebildet wird. Es ist jedoch auch denkbar, dass ein vorbestimmter Bereich des ersten Abschnitts (101) des Spritzgussteils (100) in den zweiten Formhohlraum (14) eingebracht wird. Dabei wird in radialer Richtung und/oder in axialer Richtung der zweite Abschnitt (102) des Spritzgussteils (100) an den ersten direkt angeformt.

Es wäre jedoch auch denkbar, dass der Formkern (3) entsprechend der Länge des ersten Abschnitts (101) in den zweiten Formhohlraum (14) eingebracht wird, so dass der komplette erste Abschnitt (101) sich in dem zweiten Formhohlraum (14) befindet. In diesem Fall würde vorteilhafterweise der erste Abschnitt (101) des Spritzgussteils (100) an einer Innenfläche (31) des zweiten Formhohlraums (14) anliegen.

Der Formkern (3) wird zentrisch in den zweiten Formhohlraum (14) eingebracht. Ein Abstand (32) zwischen einer Mantelfläche (8) des Überstandsbereichs (27) des Formkerns (3) und einer Innenwandfläche (32) des zweiten Formhohlraums (14) definiert die zweite Kavität (6) beziehungsweise die Wandstärke des zweiten Abschnitts (102) des Spritzgussteils (100).

Der zweite Formhohlraum (14) kann als ein Hohlzylinder ausgebildet sein, welcher mit einer Stirnwandung abgeschlossen sein kann.

Gemäß der Ausführungsform nach Figur 6 ist die zweite Kavität (6) in einem weiteren Spritzgusswerkzeug (15) angeordnet. Das weitere Spritzgusswerkzeug (15) umfasst zwei relativ zueinander verlagerbare Werkzeughälften (16, 17), welche eine Ausnehmung (16a, 17a) aufweisen, wobei im geschlossenen Zustand des weiteren Spritzgusswerkzeugs (15) diese Ausnehmungen (16a, 17a) die zweite Kavität (6) bilden. In dem weiteren Spritzgusswerkzeug (15) ist eine Öffnung (18) vorgesehen, durch welche ein Abschnitt des Formkerns (3) und/oder ein vorgegebener Bereich des ersten Abschnitts (101) des Spritzgussteils (100, 100a) in die zweite Kavität (6) eingebracht werden können.

Der erste Abschnitt (101) des Spritzgussteils (100) kann mittels des Formkerns (3) zu der zweiten Kavität (6) transferiert werden oder mittels einer weiteren Transportvorrichtung, beispielsweise eines Greifelements. Es ist auch denkbar, dass vor Schritt d) der Formkern (3) zumindest abschnittsweise aus dem ersten Abschnitt (101) des Spritzgussteils (100, 100a) entfernt wird.

Nach den Ausführungsformen gemäß den Figuren 4 und 5 ist in der zweiten Kavität (6) ein Einlegeteil (19, 19a) angeordnet ist, welches mit dem zweiten Kunststoff umspritzt wird, wobei das Einlegeteil (19, 19a) ein metallisches Einlegeteil in Form eines Stechmittels (19a) ist. Das Einlegeteil (19, 19a) kann durch eine Haltevorrichtung (34) in der zweiten Kavität (6) fixiert werden.

Denkbar ist auch, dass in der zweiten Kavität (6) ein Einlegeteil (19, 19a) angeordnet ist, welches mit einem Adapterelement (20) versehen ist, wobei das Adapterelement (20) mit dem zweiten Kunststoff umspritzt wird.

Das erste Kunststoffmaterial wird über eine erste Einspritzdüse (21) in die erste Kavität (4) eingespritzt. Das zweite Kunststoffmaterial wird über eine Einspritzdüse (23) in die zweite Kavität (6) eingespritzt. Das jeweilig Kunststoffmaterial wird über einen Heißkanal (22) der ersten (21) und zweiten Einspritzdüse (23) zugeführt.

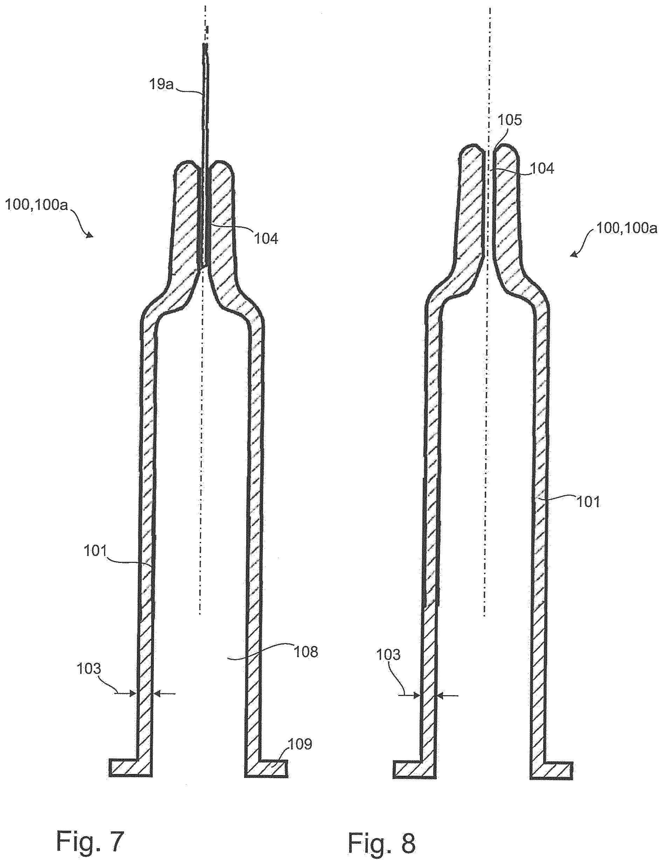

In den Figuren 7 und 8 ist ein durch das Verfahren beziehungsweise unter Verwendung der Vorrichtung (24) hergestelltes Spritzgussteil (100) dargestellt. Ein solches Spritzgussteil (100) ist ein Spritzenkörper (100a). Der Spritzenkörper weist ein konusförmiges Anschlusselement (104) auf, welches als Luer-Konus ausgestaltet sein kann. Das konusförmige Anschlusselement (104) entspricht dem zweiten Abschnitt (102) des Spritzgussteils (100, 104). Das Anschlusselement (104) weist eine Ausgangsöffnung (105) auf, welche mit dem Behälter (108) für das Medium der Spritze verbunden ist. Der erste Abschnitt (101) des Spritzgussteils (100, 104) entspricht im Wesentlichen dem Behälter für das Medium der Spritze. An dem Behälter (108) ist ein Fingerflansch (109) vorgesehen.

Der zweite Abschnitt (102) des Spritzgussteils (100, 104) kann erfindungsgemäß lediglich dem Anschlusselement (104) entsprechen. Er kann jedoch erfindungsgemäß auch zusätzlich einen Abschnitt des Behälters (108) umfassen.

In Figur 7 ist weiterhin eine Ausführungsform dargestellt, in welcher der Spritzenkörper (100a) mit einem Stechmittel (19a), beispielsweise eine Nadel oder eine Kanüle ausgestattet ist.

Der zweite Abschnitt (102) des Spritzgussteils (100, 104) kann lediglich dem Anschlusselement (104) mit dem Stechmittel entsprechen. Er kann jedoch auch zusätzlich einen Abschnitt des Behälters (108) umfassen.

Nach einer weiteren bevorzugten Ausführungsform ist der zweite Abschnitt ein Stechmittel, beispielsweise eine Nadel oder eine Kanüle angeordnet, welches von dem zweiten Kunststoff umspritzt ist.

### Bezugszeichenliste

- 1: erste Werkzeugmatrize
- 2: erster Formhohlraum
- 3: Formkern
- 4: erste Kavität
- 4a: axialer Abschnitt der ersten Kavität
- 4b: radialer Abschnitt der ersten Kavität
- 5: Aufnahmeelement
- 6: zweite Kavität
- 7: Abstand
- 8: Mantelfläche des Formkerns
- 9: Innenwandfläche des Formhohlraums
- 10: erster Endabschnitt des Formkerns
- 11: zweiter Endabschnitt des Formkerns
- 12: Aufnahmemulde
- 13: zweite Werkzeugmatrize
- 14: zweiter Formhohlraum
- 15: weiteres Spritzgusswerkzeug
- 16: Werkzeughälfte
- 16a: Ausnehmung in der Werkzeughälfte
- 17: Werkzeughälfte
- 17a: Ausnehmung in der Werkzeughälfte
- 18: Öffnung
- 19: Einlegeteil
- 19a: Stechmittel
- 20: Adapterelement
- 21: erste Einspritzdüse
- 22: Heißkanal
- 23: zweite Einspritzdüse
- 24: Vorrichtung zur Herstellung eines hohlförmigen Spritzgussteils
- 25: erste axiale Öffnung des ersten Formhohlraums
- 26: zweite axiale Öffnung des ersten Formhohlraums
- 27: Überstandsbereich des zweiten Endabschnitts des Formkerns
- 28: Stirnwandung
- 29: Stirnwandung
- 30: Haltevorrichtung
- 31: Innenfläche des zweiten Formhohlraums
- 32: Abstand
- 33: Innenwandfläche des zweiten Formhohlraums
- 34: Haltevorrichtung
- 100: Spritzgussteil
- 100a: Spritzenkörper
- 101: erster Abschnitt des Spritzgussteils
- 102: zweiter Abschnitt des Spritzgussteils
- 103: Wandstärke des Spritzgussteils
- 104: Anschlusselement
- 105: Ausgangsöffnung
- 108: Behälter für das Medium der Spritze
- 109: Fingerflansch

- X: axialen Richtung
- R: radiale Richtung

## Patentansprüche

1. Verfahren zur Herstellung eines hohlförmigen Spritzgussteils (100, 100a) in Form eines Primärpackmittels für medizinische Anwendungen durch ein Spritzgussverfahren umfassend folgende Verfahrensschritte:
a) Bereitstellen einer ersten Werkzeugmatrize (1) mit einem ersten Formhohlraum (2) und einem als Werkzeugpatrize ausgebildeten Formkern (3);
b) Einbringen des Formkerns (3) in den ersten Formhohlraum (2), so dass eine erste Kavität (4) gebildet wird und der Formkern (3) in axialer Richtung (X) über den Formhohlraum (2) hinausragt, wodurch der Formkern (3) in Wirkkontakt mit der ersten Werkzeugmatrize (1) und/oder mit einem Aufnahmeelement (5) gebracht wird;
c) Einspritzen eines ersten Kunststoffmaterials in die erste Kavität (4), so dass ein erster Abschnitt (101) des Spritzgussteils (100, 100a) gebildet wird;
d) Transferieren des ersten Abschnitts (101) des Spritzgussteils (100, 100a) zu einer zweiten Kavität (6);
e) Einspritzen eines zweiten Kunststoffmaterials in die zweite Kavität (6), so dass ein zweiter Abschnitt (102) direkt an dem ersten Abschnitt (101) des Spritzgussteils (100, 100a) angeformt wird, wodurch der erste Abschnitt (101) und der zweite Abschnitt (102) das hohlförmige Primärpackmittel in Form eines Spritzenkörpers ausbilden, wobei der erste Abschnitt (101) zumindest abschnittsweise einem Behälter (108) für ein Medium entspricht, wobei der zweite Abschnitt (102) einem Anschlusselement (104) oder einem Anschlusselement (104) und einem Abschnitt des Behälters (108) entspricht, wobei das Anschlusselement (104) eine Ausgangsöffnung (105) aufweist, welche mit dem Behälter (108) verbunden ist, wobei der Formkern (3) einen ersten Endabschnitt (10) und einen zweiten Endabschnitt (11) aufweist, wobei der zweite Endabschnitt (11) in Wirkkontakt mit der ersten Werkzeugmatrize (1) und/oder mit dem Aufnahmeelement (5) als auch mit der zweiten Kavität (6) steht, wobei der Wirkkontakt ein thermischer Kontakt ist, wobei eine Temperierung des Formkerns (3) sowohl über dessen ersten Endabschnitt (10) als auch dessen zweiten Endabschnitt (11) erfolgt.

2. Verfahren nach Anspruch 1,
**dadurch gekennzeichnet, dass**
der Formkern (3) zylinderförmig ausgebildet ist und zentrisch in den ersten Formhohlraum (21) eingebracht wird, so dass ein Abstand (7) zwischen einer Mantelfläche (8) des Formkerns (3) und einer Innenwandfläche (9) des ersten Formhohlraums (2) eine Wandstärke (103) des Spritzgussteils (100, 100a) definieren.

3. Verfahren nach Anspruch 1 oder 2,
**dadurch gekennzeichnet, dass**
sowohl der erste (10) als auch der zweite Endabschnitt (11) in axialer Richtung (X) über den ersten Formhohlraum (2) hinausragen.

4. Verfahren nach einem der vorhergehenden Ansprüche,
**dadurch gekennzeichnet, dass**
der Wirkkontakt ein Formschluss ist, wobei der Formschluss durch eine Aufnahme des Formkerns (3) in einer Aufnahmemulde (12) erfolgt, wobei die Aufnahmemulde (12) zentrisch zu dem ersten Formhohlraum (2) angeordnet ist.

5. Verfahren nach einem der vorhergehenden Ansprüche,
**dadurch gekennzeichnet, dass**
die Temperierung des Formkerns (3) induktiv, elektrisch oder mittels eines Temperierfluids erfolgt.

6. Verfahren nach einem der vorhergehenden Ansprüche,
**dadurch gekennzeichnet, dass**
die zweite Kavität (6) durch Einbringen zumindest eines Abschnitts des Formkerns (3) in eine zweite Werkzeugmatrize (13) mit einem zweiten Formhohlraum (14) gebildet wird.

7. Verfahren nach einem der Ansprüche 1 bis 6,
**dadurch gekennzeichnet, dass**
ein weiteres Spritzgusswerkzeug (15) die zweite Kavität (6) aufweist, wobei das weitere Spritzgusswerkzeug (15) zwei relativ zueinander verlagerbare Werkzeughälften (16, 17) umfasst, welche eine Ausnehmung (16a, 17a) aufweisen, wobei im geschlossenen Zustand des weiteren Spritzgusswerkzeugs (15) diese Ausnehmungen (16a, 17a) die zweite Kavität (6) bilden, wobei eine Öffnung (18) vorgesehen ist, durch welche ein Abschnitt des Formkerns (3) und/oder ein vorgegebener Bereich des ersten Abschnitts (101) des Spritzgussteils (100, 100a) in die zweite Kavität (6) eingebracht werden können.

8. Verfahren nach einem der vorhergehenden Ansprüche,
**dadurch gekennzeichnet, dass**
in Schritt d) der erste Abschnitt (101) des Spritzgussteils (100) mittels des Formkerns (3) zu der zweiten Kavität (6) transferiert wird.

9. Verfahren nach einem der vorhergehenden Ansprüche,
**dadurch gekennzeichnet, dass**
vor Schritt d) der Formkern (3) zumindest abschnittsweise aus dem ersten Abschnitt (101) des Spritzgussteils (100, 100a) entfernt wird.

10. Verfahren nach einem der vorhergehenden Ansprüche,
**dadurch gekennzeichnet, dass**
in der zweiten Kavität (6) ein Einlegeteil (19, 19a) angeordnet ist, welches mit dem zweiten Kunststoff umspritzt wird, wobei das Einlegeteil (19, 19a) ein metallisches Einlegeteil in Form eines Stechmittels (19a) ist.

11. Verfahren nach einem der vorhergehenden Ansprüche,
**dadurch gekennzeichnet, dass**
in der zweiten Kavität (6) ein Einlegeteil (19, 19a) angeordnet ist, welches mit einem Adapterelement (20) versehen ist, welches mit dem zweiten Kunststoff umspritzt wird.

12. Verfahren nach einem der vorhergehenden Ansprüche,
**dadurch gekennzeichnet, dass**
das erste Kunststoffmaterial in die erste Kavität (4) und/oder das zweite Kunststoffmaterial in die zweite Kavität (6) über jeweils einen Heißkanal (22) eingespritzt wird.

13. Vorrichtung (24) zur Herstellung eines hohlförmigen Spritzgussteils (100, 100a), insbesondere zur Herstellung mit einem Verfahren nach einem der Ansprüche 1 bis 12 umfassend eine erste Werkzeugmatrize (1) mit einem ersten Formhohlraum (2) und einem als Werkzeugpatrize ausgebildeten Formkern (3), welcher einen ersten Endabschnitt (10) und einen zweiten Endabschnitt (11) aufweist, wobei der Formkern (3) in dem ersten Formhohlraum (2) anordenbar ist, so dass sowohl der erste (10) als auch der zweite Endabschnitt (11) in axialer Richtung (X) über den ersten Formhohlraum (2) hinausragen, wodurch der zweite Endabschnitt (11) in Wirkkontakt mit der ersten Werkzeugmatrize (1) und/oder mit einem Aufnahmeelement (5) als auch mit einer zweiten Kavität (6) steht, wobei der Wirkkontakt ein thermischer Kontakt ist, wobei eine Temperierung des Formkerns (3) sowohl über dessen ersten Endabschnitt (10) als auch dessen zweiten Endabschnitt (11) erfolgt.

## Claims

1. A method for producing a hollow injection-moulded part (100, 100a) in the form of a primary packaging means for medical applications by an injection moulding method comprising the following method steps:
a) Providing a first female die tool (1) having a first mould cavity (2) and a mould core (3) formed as a male die tool;
b) Introducing the mould core (3) into the first mould cavity (2), so that a first cavity (4) is formed and the mould core (3) protrudes beyond the mould cavity (2) in axial direction (X), thereby the mould core (3) is brought into operative contact with the first female die tool (1) and/or with a receiving element (5);
c) Injecting a first plastic material into the first cavity (4), so that a first portion (101) of the injection-moulded part (100, 100a) is formed;
d) Transferring the first portion (101) of the injection-moulded part (100, 100a) to a second cavity;
e) Injecting a second plastic material into the second cavity (6), so that a second portion (102) is formed directly on the first portion (101) of the injection-moulded part (100, 100a), wherein the first portion (101) and the second portion (102) form the hollow primary packaging means in the form of a syringe body,, wherein the first portion (101) at least partially corresponds to a container (108) for the medium, wherein the second portion (102) corresponds to a connection element (104) or a connection element and a portion of the container (108), wherein the connection element (104) has an outlet opening (105) which is connected to the container (108), wherein the mould core (3) has a first end portion (10) and a second end portion (11), wherein the second end portion (11) is in operative contact with the first female die tool (1) and/or with the receiving element (5) as well as with the second cavity (6), wherein the operative contact is a thermal contact, wherein a tempering of the mould core (3) occurs both via the first end portion (10) and the second end portion (11).

2. The method according to claim 1,
**characterised in that**
the mould core (3) is of cylindrical design and is introduced centrally into the first mould cavity (21), so that a distance (7) between a shell surface (8) of the mould core (3) and an inner wall surface (9) of the first mould cavity (2) define a wall thickness (103) of the injection-moulded part (100, 100a).

3. The method according to claim 1 or claim 2,
**characterised in that**
both the first (10) and the second end portion (11) protrude beyond the first mould cavity (2) in the axial direction (X).

4. The method according to any of the preceding claims,
**characterised in that**
the operative contact is a form fit, wherein the form fit occurs through a reception of the mould core (3) in a receiving recess (12), wherein the receiving recess (12) is arranged centrally to the first mould cavity (2).

5. The method according to any of the preceding claims,
**characterised in that**
the tempering of the mould core (3) follows inductively, electrically or by means of a tempering fluid.

6. The method according to any of the preceding claims,
**characterised in that**
the second cavity (6) is formed by introducing at least one portion of the mould core (3) into a second female die tool (13) with a second mould cavity (14).

7. The method according to any of claims 1 to 6,
**characterised in that**
a further injection mould tool (15) has the second cavity (6), wherein the further injection mould tool (15) comprises two mould tool halves which are displaceable in relation to one another (16, 17), and which have a recess (16a, 17a), wherein, in the closed state of the further injection mould tool (15), these recesses (16a, 17a) form the second cavity (6), wherein an opening (18) is provided, through which a portion of the mould core (3) and/or a predetermined region of the first portion (101) of the injection-moulded part (100, 100a) can be introduced into the second cavity (6).

8. The method according to any of the preceding claims,
**characterised in that**
in step d), the first portion (101) of the injection-moulded part (100) is transferred to the second cavity (6) by means of the mould core (3).

9. The method according to any of the preceding claims,
**characterised in that**
before step d), the mould core (3) is at least removed in sections from the first portion (101) of the injection-moulded part (100, 100a).

10. The method according to any of the preceding claims,
**characterised in that**
in the second cavity (6), an insert component (19, 19a) is arranged, which is overmoulded with the second plastic, wherein the insert component (19, 19a) is a metallic insert component in the form of a piercing means (19a).

11. The method according to any of the preceding claims,
**characterised in that**
in the second cavity (6), an insert component (19, 19a) is arranged, which is provided with an adapter element (20), which is overmoulded with the second plastic.

12. The method according to any of the preceding claims,
**characterised in that**
the first plastic material is injected into the first cavity (4), and/or the second plastic material is injected into in the second cavity (6) via a respective hot runner (22).

13. An apparatus (24) for producing a hollow injection-moulded part (100, 100a), in particular for production by a method according to one of claims 1 to 12, comprising a first female die tool (1) having a first mould cavity (2) and a mould core (3) formed as a male die tool, which has a first end portion (10) and a second end portion (11), wherein the mould core (3) may be arranged in the first mould cavity (2) so that both the first (10) and the second end portion (11) protrude beyond the first mould cavity (2) in the axial direction (X), wherein the second end portion (11) is in operative contact with the first female die tool (1) and/or with a receiving element (5) as well as with the second cavity (6), wherein the operative contact is a thermal contact, wherein a tempering of the mould core (3) occurs both via the first end portion (10) and the second end portion (11).

## Revendications

1. Procédé de fabrication d'une pièce moulée par injection (100, 100a), creuse, sous forme d'un moyen d'emballage primaire pour des applications médicales, par un procédé de moulage par injection, comportant les étapes de procédé suivantes :
a) fourniture d'une première partie femelle de moule (1) ayant une première cavité de moule (2) et un noyau de moule (3) configuré comme partie mâle de moule ;
b) introduction du noyau de moule (3) dans la première cavité de moule (2), de telle sorte qu'une première cavité (4) est formée et que le noyau de moule (3) dépasse de la cavité de moule (2) dans la direction axiale (X), ce par quoi le noyau de moule (3) est amené en contact actif avec la première partie femelle de moule (1) et/ou avec un élément de réception (5) ;
c) injection d'une première matière plastique dans la première cavité (4), de telle sorte qu'une première section (101) de la pièce moulée par injection (100, 100a) est formée ;
d) transfert de la première section (101) de la pièce moulée par injection (100, 100a) dans une seconde cavité (6) ;
e) injection d'une seconde matière plastique dans la seconde cavité (6), de telle sorte qu'une seconde section (102) est formée directement sur la première section (101) de la pièce moulée par injection (100, 100a), ce par quoi la première section (101) et la seconde section (102) forment le moyen d'emballage primaire creux sous la forme d'un corps de seringue, la première section (101) correspondant au moins par segments à un conteneur (108) pour un milieu, la seconde section (102) correspondant à un élément de raccordement (104) ou à un élément de raccordement et à une section du conteneur (108), l'élément de raccordement (104) présentant une ouverture de sortie (105), laquelle est reliée avec le conteneur (108), le noyau de moule (3) présentant une première section d'extrémité (10) et une seconde section d'extrémité (11), la seconde section d'extrémité (11) étant en contact actif avec la première partie femelle de moule (1) et/ou avec l'élément de réception (5) comme également avec la seconde cavité (6), le contact actif étant un contact thermique, une régulation de température du noyau de moule (3) ayant lieu non seulement par sa première section d'extrémité (10) mais encore par sa seconde section d'extrémité (11).

2. Procédé selon la revendication 1,
**caractérisé par le fait que**
le noyau de moule (3) est configuré de forme cylindrique et est introduit de façon centrale dans la première cavité de moule (2), de telle sorte qu'une distance (7) entre une surface d'enveloppe (8) du noyau de moule (3) et une surface de paroi intérieure (9) de la première cavité de moule (2) définit une épaisseur de paroi (103) de la pièce moulée par injection (100, 100a).

3. Procédé selon l'une des revendications 1 ou 2,
**caractérisé par le fait que**
non seulement la première (10) mais encore la seconde section d'extrémité (11) dépassent de la première cavité de moule (2) dans la direction axiale (X).

4. Procédé selon l'une des revendications précédentes,
**caractérisé par le fait que**
le contact actif est une conjugaison de formes, la conjugaison de formes ayant lieu par une réception du noyau de moule (3) dans une cavité de réception (12), la cavité de réception (12) étant disposée de façon centrale par rapport à la première cavité de moule (2).

5. Procédé selon l'une des revendications précédentes,
**caractérisé par le fait que**
la régulation de température du noyau de moule (3) s'effectue par induction, électriquement ou au moyen d'un fluide de régulation de température.

6. Procédé selon l'une des revendications précédentes,
**caractérisé par le fait que**
la seconde cavité (6) est formée par introduction d'au moins une section du noyau de moule (3) dans une seconde partie femelle de moule (13) ayant une seconde cavité de moule (14).

7. Procédé selon l'une des revendications 1 à 6, **caractérisé par le fait qu'**
un autre outil de moulage par injection (15) présente la seconde cavité (6), l'autre outil de moulage par injection (15) comportant deux moitiés de moule (16, 17) déplaçables l'une par rapport à l'autre, lesquelles présentent un évidement (16a, 17a), ces évidements (16a, 17a) formant, dans l'état fermé de l'autre outil de moulage par injection (15), la seconde cavité (6), une ouverture (18) étant prévue, à travers laquelle une section du noyau de moule (3) et/ou une région prédéterminée de la première section (101) de la pièce moulée par injection (100, 100a) peuvent être introduites dans la seconde cavité (6).

8. Procédé selon l'une des revendications précédentes,
**caractérisé par le fait qu'**
à l'étape d), la première section (101) de la pièce moulée par injection (100) est transférée dans la seconde cavité (6) au moyen du noyau de moule (3).

9. Procédé selon l'une des revendications précédentes,
**caractérisé par le fait qu'**
avant l'étape d), le noyau de moule (3) est retiré au moins par sections de la première section (101) de la pièce moulée par injection (100, 100a).

10. Procédé selon l'une des revendications précédentes,
**caractérisé par le fait que**
dans la seconde cavité (6) est disposée une pièce d'insertion (19, 19a), laquelle est surmoulée avec la seconde matière plastique, la pièce d'insertion (19, 19a) étant une pièce d'insertion métallique sous forme d'un moyen de perçage (19a).

11. Procédé selon l'une des revendications précédentes,
**caractérisé par le fait que**,
dans la seconde cavité (6) est disposée une pièce d'insertion (19, 19a), laquelle est pourvue d'un élément adaptateur (20), lequel est surmoulé avec la seconde matière plastique.

12. Procédé selon l'une des revendications précédentes,
**caractérisé par le fait que**
la première matière plastique est injectée dans la première cavité (4) et/ou la seconde matière plastique est injectée dans la seconde cavité (6) par un canal chaud respectif (22).

13. Dispositif (24) pour la fabrication d'une pièce moulée par injection (100, 100a), creuse, en particulier pour la fabrication par un procédé selon l'une des revendications 1 à 12, comportant une première partie femelle de moule (1) avec une première cavité de moule (2) et un noyau de moule (3) configuré comme partie mâle de moule, lequel présente une première section d'extrémité (10) et une seconde section d'extrémité (11), le noyau de moule (3) étant apte à être disposé dans la première cavité de moule (2), de telle sorte que non seulement la première (10) mais encore la seconde section d'extrémité (11) dépassent de la première cavité de moule (2) dans la direction axiale (X), ce par quoi la seconde section d'extrémité (11) est en contact actif avec la première partie femelle de moule (1) et/ou avec un élément de réception (5) comme également avec une seconde cavité (6), le contact actif étant un contact thermique, une régulation de température du noyau de moule (3) ayant lieu que non seulement par sa première section d'extrémité (10) mais encore par sa seconde section d'extrémité (11).
